# EUROPEAN PATENT SPECIFICATION

(11) **EP 2 831 655 B1**
(45) Date of publication and mention of the grant of the patent: **26.12.2018**
(21) Application number: 13767640.9
(22) Date of filing: 29.03.2013
(51) Int. Cl.: G02B 6/44, G02B 6/46, G02B 6/48

(54) **Distributed optical network using indexing terminals and multi-service terminals**
Verteiltes optisches Netzwerk mittels Indexierterminals und Multiservice-Endgeräte
RÉSEAU OPTIQUE RÉPARTI AU MOYEN DE BORNES À INDEXATION ET TERMINAUX MULTI-SERVICE

(30) Priority: 30.03.2012 US 201261618156 P
(43) Date of publication of application: 04.02.2015
(73) Proprietor: ADC Telecommunications Inc., Berwyn, PA 19312 (US)
(72) Inventor: KMIT, Paul, Maple Grove, MN 55311 (US); PARSONS, Thomas, Leominster, MA 01453 (US); GRONVALL, Erik, Bloomington, MN 55437 (US); ELLENS, Douglas, C., Starbuck, MN 56381 (US); TOUNDAS, Panayiotis, Vancouver, BC V5Y 1X4 (CA); BADAR, Timothy, G., St. Paul, MN 55116 (US); SMITH, Trevor, D., Eden Prairie, MN 55347 (US)
(74) Representative: Patentanwälte Bressel und Partner mbB
(86) International application number: PCT/US2013/034618
(87) International publication number: WO 2013/149150

(56) References cited:
- WO-A1-2010/093794
- WO-A2-2008/079329
- FR-A1- 2 914 753
- JP-A- H1 032 545
- US-A1- 2009 317 047
- US-A1- 2010 092 129
- US-A1- 2010 142 888

## Description

### Technical Field

The present disclosure relates generally to equipment for fiber optic communications networks. More particularly, the present disclosure relates to the components of passive optical networks and methods for deploying the same.

### Background

Passive optical networks are becoming prevalent in part because service providers want to deliver high bandwidth communication capabilities to customers. Passive optical networks are a desirable choice for delivering high-speed communication data because they may not employ active electronic devices, such as amplifiers and repeaters, between a central office and a subscriber termination. The absence of active electronic devices may decrease network complexity and/or cost and may increase network reliability, US 2010/0092129 discloses a fiber optic network having a branch cable with a plurality of optical fibers optically coupled to a distribution cable, and including optical connection terminals having drop ports and pass-through ports.

### Summary

The present invention relates to a distributed optical network according to claim 1.

A variety of additional aspects will be set forth in the description that follows. These aspects can relate to individual features and to combinations of features. It is to be understood that both the foregoing general description and the following detailed description are exemplary and explanatory only and are not restrictive of the broad concepts upon which the embodiments disclosed herein are based.

### Brief Description of the Drawings

FIG. 1 is a schematic diagram of an example distributed optical network including indexing terminals daisy-chained together;
FIG. 2 is a schematic diagram of an example indexing terminal suitable for use in the distributed optical network of FIG. 1;
FIG. 3 is a schematic diagram of the example distributed optical network of FIG. 1 in which a number of multi-service terminals have been deployed to connect subscribers to the network;
FIG. 4 is a front elevational view of an indexing terminal mounted to an example mounting and payout arrangement including a universal mounting bracket and a payout spool in accordance with the principles of the present disclosure;
FIG. 5 is a top plan view of the example mounting and payout arrangement of FIG. 4 showing the stub distribution cable of the indexing terminal wrapped around a slack storage spool and the payout spool;
FIG. 6 is a side elevational view of a mounting bracket mounted to a pole after the stub distribution cable is paid out and the payout spool is removed in accordance with the principles of the present disclosure;
FIG. 7 is a top plan view of the mounting bracket and pole of FIG. 6;
FIG. 8 is a schematic diagram of another example indexing terminal having multiple single-fiber ports and multiple multi-fiber ports;
FIG. 9 is a schematic diagram of an example distributed optical network in which any of the indexing terminals disclosed herein may be deployed; and
FIG. 10 is a top plan view of another example universal bracket lashed to a strand and holding an example multi-service terminal mounted to an example indexing terminal.

### Detailed Description

Reference will now be made in detail to the exemplary aspects of the present disclosure that are illustrated in the accompanying drawings. Wherever possible, the same reference numbers will be used throughout the drawings to refer to the same or like structure.

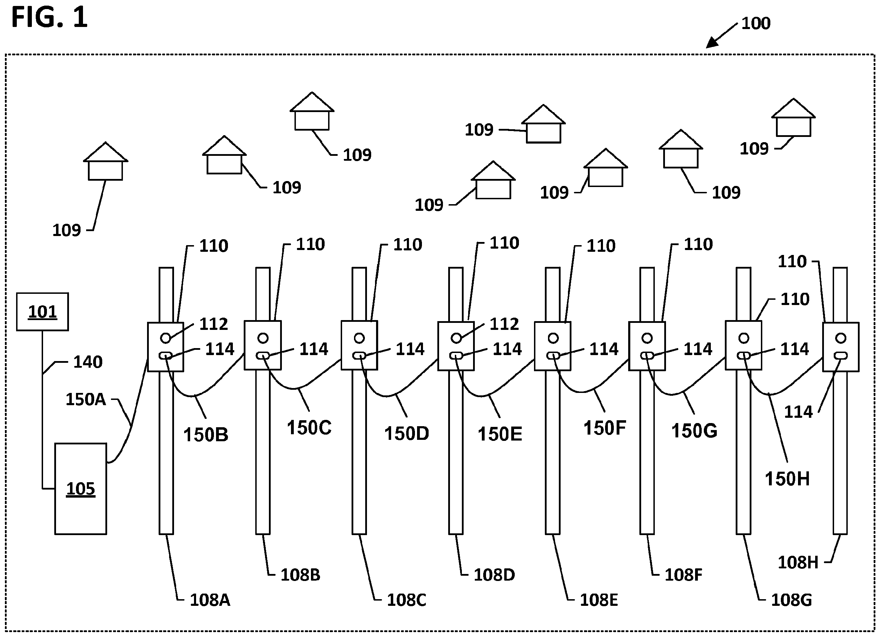

FIG. 1 illustrates an example optical network 100 being deployed in accordance with the principles of the present disclosure. The example optical network 100 includes a central office 101 and at least one fiber distribution hub 105. While only a single hub 105 is shown in FIG. 1, it will be understood that optical networks 100 typically include multiple hubs. At least one feeder cable 140 extends from the central office 101 to each distribution hub 105. At the distribution hub 105, optical fibers carried by the feeder cable 140 are split onto optical fibers of one or more distribution cables 150. At least one distribution cable 150 extends from the distribution hub 105 towards subscriber premises 109.

In accordance with some aspects, the optical network 100 is a distributed optical network in which optical signals may be split at a splitting location disposed between the distribution hub 105 and the individual subscriber premises 109 as will be disclosed in more detail herein. In such systems, individual optical fibers may be broken out from the distribution cable 150 at geographic intervals and routed to the splitting locations. In various implementations, the splitting locations may be positioned at telephone poles, strands, and/or hand holes. From the splitting locations, the split optical signals are carried by drop cables to the individual subscriber premises 109.

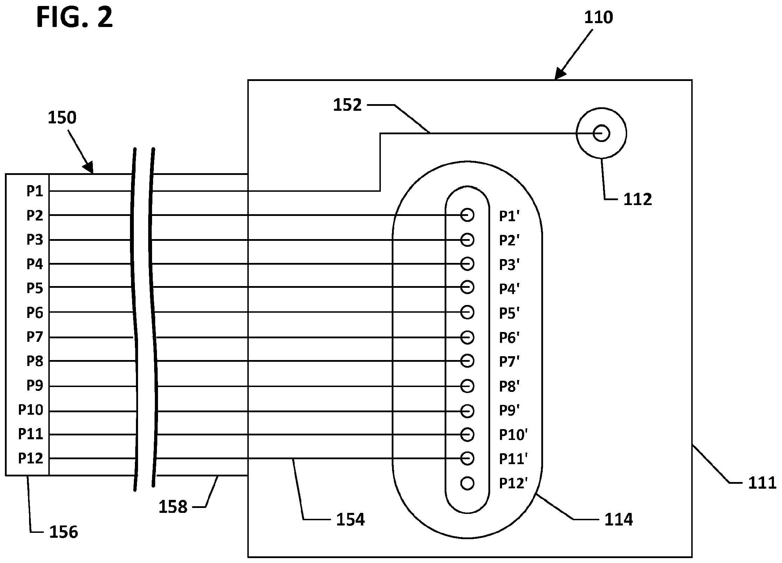

In some implementations, the individual optical fibers are broken out from the distribution cable 150 at indexing terminals 110. Each indexing terminal 110 receives a distribution cable 150 having two or more optical fibers. In some implementations, the distribution cable 150 is a stub cable that extends outwardly from the indexing terminal 110. In other implementations, the indexing terminal 110 receives a connectorized end of the distribution cable 150. In certain implementations, each indexing terminal 110 separates one of the optical fibers from the other optical fibers 152 of the distribution cable 150. The separated optical fiber 152 is routed to a first port 112 of the indexing terminal 110 and the other optical fibers 154 are routed to a second port 114 of the indexing terminal 110 (e.g., see FIG. 2).

In the example shown in FIG. 1, a first distribution cable 150A is routed from the distribution hub 105 to a mounting structure (e.g., telephone pole) 108A at which an indexing terminal 110 is mounted. The indexing terminal 110 has a first port 112 and a second port 114. A second distribution cable 150B extends from the indexing terminal 110 at the first mounting structure 108A to another indexing terminal mounted at a second mounting structure 108B. In the distributed network 100 shown in FIG. 1, indexing terminals 110 are mounted to eight poles 108A-108H. These indexing terminals 110 are daisy-chained together using distribution cables 150A-150H as will be described in more detail herein. In other implementations, however, distributed networks may include a greater or lesser number of indexing terminals 110.

FIG. 2 illustrates an example indexing terminal 110 suitable for use in the distributed optical network 100 of FIG. 1. The indexing terminal 110 includes a housing 111 that defines the first port 112 and the second port 114. In the example shown, a stub distribution cable 150 extends outwardly from the indexing terminal housing 111. The stub distribution cable 150 includes multiple optical fibers that are connectorized at an end opposite the indexing terminal housing 111. In the example shown, the stub distribution cable 150 includes twelve optical fibers. In other implementations, however, the stub distribution cable 150 may include a greater or lesser number of optical fibers (e.g., four, eight, ten, sixteen, twenty-four, seventy-two, etc.).

In certain implementations, the optical fibers of the stub distribution cable 150 extend from first ends to second ends. The first ends of the fibers are connectorized at a multi-fiber connector 156 (e.g., an MPO-type connector). In the example shown, the first ends of the fibers are connectorized at a ruggedized multi-fiber connector (e.g., an HMFOC-connector). As the terms are used herein, ruggedized optical connectors and ruggedized optical adapters are configured to mate together to form an environmental seal. Some non-limiting example ruggedized optical connector interfaces suitable for use with an indexing terminal 110 are disclosed in U.S. Patent Nos. 7744288, 7762726, 7744286, 7942590, and 7959361.

The connector 156 indexes the first end of each optical fiber at a particular position relative to the other fibers. In the example shown, the connector 156 indexes each of the twelve optical fibers into one of twelve positions P1-P12. The second port 114 has the same number of fiber positions as the connector 156. In the example shown, the second port 114 has twelve fiber positions P1'-P12' that correspond with the fiber positions P1-P12 of the connector 156. However, at least one of the fiber positions at the second port 114 does not receive an optical fiber as will be disclosed in more detail herein.

A first one 152 of the optical fibers has a first end located at the first position P1 of the connector 156. The second end of the first optical fiber 152 is separated out from the rest of the optical fibers 152 within the indexing terminal housing 111 and routed to the first port 112 at which optical signals carried by the first optical fiber 152 may be accessed. In some implementations, the first port 112 defines a female port at which an optical fiber plug may be mated to the first optical fiber 152 as will be described in more detail herein. In certain implementations, the first port 112 includes a ruggedized (i.e., hardened) optical adapter configured to receive a ruggedized optical connector (e.g., an HMFOC).

The remaining optical fibers 154 are routed to the second port 114. At least one of the fiber positions P1'-P12' does not receive an optical fiber 154 since at least one optical fiber 152 is diverted to the first port 112. However, the second port 114 indexes the received optical fibers 154 so that a first position P1' at the second port 114 that corresponds with the first position P1 of the connector does receive one of the optical fibers 154. In accordance with aspects of the disclosure, when the indexing terminals 110 are daisy-chained together as shown in FIG. 1, the optical fiber 152 diverted to the first port 112 will be pulled from the same position P1-P12. Also, the remaining fibers 154 will be cabled so that the corresponding position P1'-P12' at the second port 114 will receive one of the optical fibers 154 if any are available.

In the example shown, the separated optical fiber 152 is located at an end of the row/strip of fibers. Accordingly, the optical fibers 154 are cabled within the terminal housing 111 to divert the second end of each optical fiber 154 over one indexed position P1'-P12'compared to the first end. For example, a fiber 154 having a first end at position Pn of the connector 156 would have a second end at position P(n-1)' at the second port 114. In the example shown, the optical fiber 154 having a first end at the second position P2 of the connector 156 will have a second end disposed at the first position P1' of the second port 114. Likewise, the optical fiber 154 having a first end at disposed the third position P3 of the connector 156 will have a second end disposed at the second position P2' of the second port 114. The optical fiber 154 having a first end at the twelfth position P12 of the connector 156 will have a second end disposed at the eleventh position P11' of the second port 114. The twelfth position P12' of the second port 114 will not receive an optical fiber. In other implementations, the optical fiber at any of the positions P1-P12 may be separated out from the rest as long as each indexing terminal separates out a fiber from the same position.

Such a cabling configuration enables the indexing terminals to be daisy-chained together using identical components while always delivering the next fiber in line to the first port 112. For example, in FIG. 1, the stub distribution cable 150B of the second indexing terminal 110 mounted to the second pole 108B may be routed to and plugged into the second port 114 of the first indexing terminal 110 mounted to the first pole 108A. The stub distribution cable 150A of the first indexing terminal 110 may be routed to the distribution hub 105 to receive split optical signals from the feeder cable 140. Accordingly, the split optical signals carried by the first optical fiber 152 of the first stub distribution cable 150A are routed to the first port 112 of the first indexing terminal 110. The split optical signals carried by the remaining optical fibers 154 of the first stub distribution cable 150A are routed to positions P1' -P11' of the second port 114 of the first indexing terminal 110.

At the second port 114, the second optical fiber 154 of the first stub cable 150A is mated with the first optical fiber 152 of the second stub cable 150B. The first optical fiber 152 of the second stub cable 150B is routed to the first port 112 of the second indexing terminal. Accordingly, the split optical signals carried by the second optical fiber 154 of the first stub cable 150A propagate to the first optical fiber 152 of the second stub cable 150B and are accessible at the second port 114 of the second indexing terminal 110. Likewise, the split optical signals carried by the sixth optical fiber 154 of the first stub cable 150A propagate to the fifth optical fiber 154 of the second stub cable 150B, the fourth optical fiber 154 of the third stub cable 150C, the third optical fiber 154 of the fourth stub cable 150D, the second optical fiber 154 of the fifth stub cable 150E, and the first optical fiber 152 of the sixth stub cable 150F and are accessible at the second port 114 of the sixth indexing terminal 110.

In alternative implementations, the distribution cable 150 is not a stub cable and the indexing terminal housing 111 defines an input port (e.g., an HMFOC port) configured to receive a second connectorized end of the distribution cable 150. In such implementations, internal cabling between the input port and the second port 114 is implemented as described above. Accordingly, the optical fiber coupled to a first position at the input port is routed to the first port 112 and the optical fiber coupled to a second position at the input port is routed to a first position at the second port 114. In such implementations, each distribution cable 150 would include twelve optical fibers that are connectorized at both ends. The first end of each distribution cable 150 would mate with the input port of one indexing terminal. The second end of each distribution cable 150 would mate with the second port 114 of another indexing terminal.

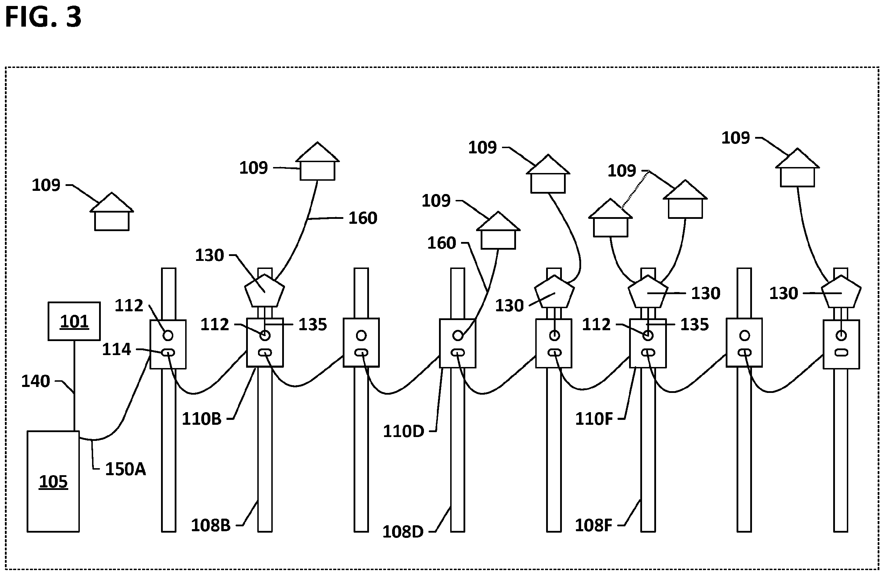

As shown in FIG. 3, subscribers 109 may be coupled to the optical network 100 via the first ports 112 of the indexing terminals 110. According to the invention, multi-service terminals 130 are mounted at or near the indexing terminals 110. The multi-service terminals 130 include one or more optical power splitters and/or wave division multiplexers. Splitter pigtails are routed to distribution ports 138 on the multi-service terminal 130. Drop cables 160 may be routed between the distribution ports and the subscriber premises 109. Additional details regarding examples of suitable multi-service terminals can be found in U.S. Patent No. 7,444,056 and in U.S. Publication No. 2009/0208177.

A cable 135 optically couples one of the multi-service terminals 130 to one of the indexing terminals 110. In some implementations, the cable 135 is a stub cable that extends from the multi-service terminal. For example, a connectorized end of the stub cable 135 may be plugged into the first port 112 of the indexing terminal 110 so that optical signals provided at the first port 112 are routed to the optical splitters and/or wave division multiplexers. In other implementations, the cable 135 is connectorized at both ends and plugs into the first port 112 of the indexing terminal 110 and an input port of the multi-service terminal 130. In still other implementations, the cable 135 is a stub cable extending from the indexing terminal that defines the single-fiber port 112 at a distal end that plugs into an input port of the multi-service terminal 130.

In the example shown in FIG. 3, the distributed optical network includes indexing terminals 110 mounted to eight poles 108A-108H and daisy-chained together via the distribution cables 150A-150H as described above. A first subscriber 109 is coupled to the optical network 100 via a multi-service terminal 130 mounted at the second pole 108B. In particular, a drop cable 160 extends between the subscriber 109 and the multi-service terminal 130. A subscriber cable 135 extends between the multi-service terminal 130 and the first port 112 of the indexing terminal 110. Accordingly, the subscriber 109 receives optical signals that are carried from the distribution hub 105, over the second optical fiber 154 of the first distribution cable 150A, over the first optical fiber 152 of the second distribution cable 150B, to the second port 114 of the second indexing terminal 110B.

As shown at the sixth pole 108F of FIG. 3, optical signals from the single optical fiber 152 received at the first port 112 of the indexing terminal 110 may be carried to the multi-service terminal 130 via cable 135. At the multi-service terminal 130, the optical signals may be split onto two or more (e.g., four, eight, ten, twelve, sixteen, twenty-four, etc.) drop cables 160. Also as shown in FIG. 3, in certain implementations not forming part of the invention, a drop cable 160 may be routed to the subscriber premises 109 directly from the first port 112 of one of the indexing terminals 110 (e.g., see the fourth indexing terminal 110D). Routing the drop cable 160 directly from the indexing terminal 110 would provide a stronger (i.e., unsplit) optical signal to the subscriber 109.

In still other implementations, one or more optical splitters or wave division multiplexers may be mounted within the indexing terminal 110. In some such implementations not forming part of the invention, the indexing terminal may include multiple single-fiber ports to which drop cables 160 may be coupled. In other such implementations forming part of the invention, the split signals are routed to optical fibers terminated at a multi-fiber connector that is plugged into the first port 112, which may be optically coupled to an input of a multi-service terminal 130 that includes an optical splitter.

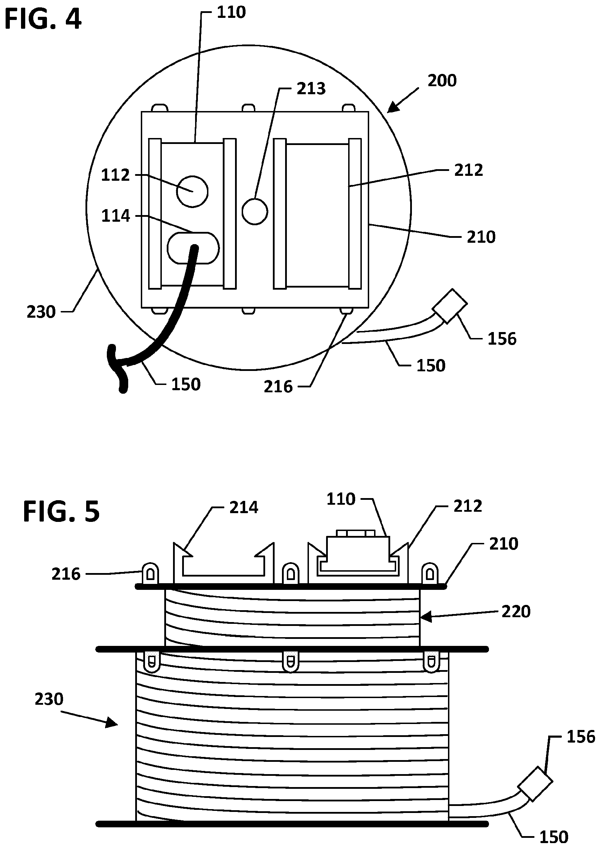

FIGS. 4-5 illustrate one example implementation of a mounting and payout arrangement 200 by which the indexing terminals 110 may be deployed. The mounting and payout arrangement 200 includes a mounting bracket 210 that is configured to secure at least the indexing terminal 110 to a telephone pole 108 or other mounting structure. The mounting bracket 210 includes at least one fastening arrangement 212 at which the indexing terminal 110 may be secured. In the example shown, the fastening arrangement 212 includes a sleeve having latching sides. In some implementations, the indexing terminal 110 may be snap-fit into the sleeve of the fastening arrangement 212. In other implementations, the indexing terminal 110 may be slid into the sleeve of the fastening arrangement 212 from a top or bottom of the sleeve. In other implementations, the fastening arrangement 212 may otherwise secure the indexing terminal 110 to the bracket 210.

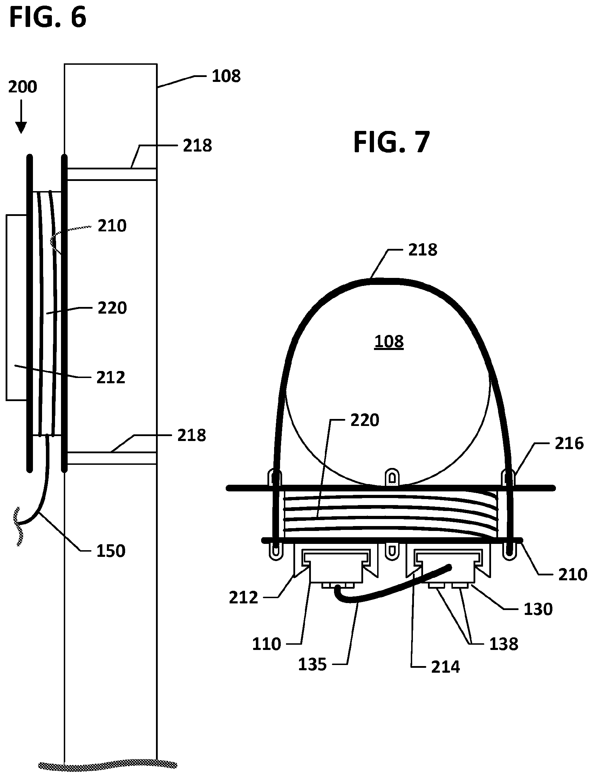

In some implementations, the mounting bracket 210 also includes a second fastening arrangement 214 at which a multi-service terminal 130 may be secured (e.g., see FIG. 7). In the example shown, the second fastening arrangement 214 is the same as the fastening arrangement 212. In other implementations, however, the second fastening arrangement 214 may have a different structure than the fastening arrangement 212. In still other implementations, the indexing terminal 110 and the multi-service terminal 130 may be secured to the mounting bracket 210 using a common fastening arrangement. In still other implementations, the multi-service terminal 130 is configured to be mounted to a separate mounting bracket.

The mounting and payout arrangement 200 also includes a payout spool 230 from which the distribution cable 150 of the indexing terminal 110 may be paid out. In some implementations, the payout spool 230 is removable from the mounting bracket 210 when the distribution cable 150 has been unwound from the payout spool 230 (see FIGS. 6 and 7). Removing the payout spool 230 after deployment reduces the footprint of the arrangement that is mounted to the pole 108 or other mounting structure.

The stub distribution cable 150 of the indexing terminal 110 is initially wound around the payout spool 230. The payout spool 230 facilitates management and storage of the distribution cable 150 prior to deployment. In some implementations, the payout spool 230 is configured to rotate about a drum (e.g., mounted to a vehicle) to facilitate deployment of the cable 150. For example, the drum or spool may be inserted through passage 213 that extends through the payout spool 230 along an axis of rotation. In certain implementations, the mounting bracket 210 and indexing terminal 110 rotate in unison with the payout spool 230. In other implementations, the payout spool 230 rotates relative to the mounting bracket 210.

In certain implementations, the mounting and payout arrangement 200 also includes a slack storage spool 220. The slack storage spool 220 remains coupled to the mounting bracket 210 after the payout spool 230 has been removed. The slack storage spool 220 accommodates any excess length of the distribution cable 150 after the indexing terminal 110 is secured to the mounting structure 108. Accordingly, mounting and payout arrangement 200 may be deployed with standardized cable lengths (e.g., 25 feet (7.62 metres), 50 feet (15.24 metres), 100 feet (30.48 metres), 1,000 feet (304.8 metres), 2,000 feet (609.6 metres), 3,000 feet (914.4 metres), etc.). In some implementations, a first portion of the distribution cable 150 nearer the indexing terminal 110 is wound around the slack storage spool 220 and the remainder of the distribution cable 150 is wound around the payout spool 230. In certain implementations, the slack storage spool 220 has a smaller cross-dimension (e.g., diameter) than the payout spool 230.

FIGS. 6 and 7 illustrate the example mounting bracket 210 securing the indexing terminal 110 to an example telephone pole 108 after the payout spool 230 has been removed. The indexing terminal 110 is held to the mounting bracket 210 by fastening arrangement 212. The mounting bracket 210 is coupled to the slack storage spool 220, which is disposed against the pole 108. In the example shown, the bracket 210 is mounted to the pole 108 using straps 218 that wrap around the pole 108 and couple to hooks 216. In other implementations, the bracket 210 may be otherwise coupled to the pole 108. In the example shown in FIG. 7, a multi-service terminal 130 has been mounted to the bracket 210 using fastening arrangement 214. A stub cable 135 of the multi-service terminal 130 is plugged into the first port 112 of the indexing terminal 110. Ruggedized ports 138 of the multi-service terminal 130 are configured to receive drop cables 160 as needed to add subscribers 109 to the network 100.

The distributed optical fiber network 100 is initially deployed by plugging the connectorized end 156 of a first distribution cable 150A into a termination field at a fiber distribution hub 105 or otherwise coupling the connectorized end 156 to one or more fibers of the feeder cable 140. In certain implementations, the first distribution cable 150A extends from an indexing terminal 110 mounted to a mounting and payout arrangement 200. The distribution cable 150A is paid out from a payout spool 230 of the mounting and payout arrangement 200 as the mounting and payout arrangement 200 is moved from the distribution hub 105 to a first pole 108A. For example, the payout spool 230 may be rotatably mounted to a shaft on a vehicle so that the payout spool 230 unwinds as the vehicle moves. In an alternative implementation, the mounting and payout arrangement 200 is secured to a mounting location and the distribution cable 150 is paid out and routed to the hub 105. In certain implementations, the distribution cable 150A is lashed to a strand between adjacent mounting structures 108 as the cable 150A is paid out.

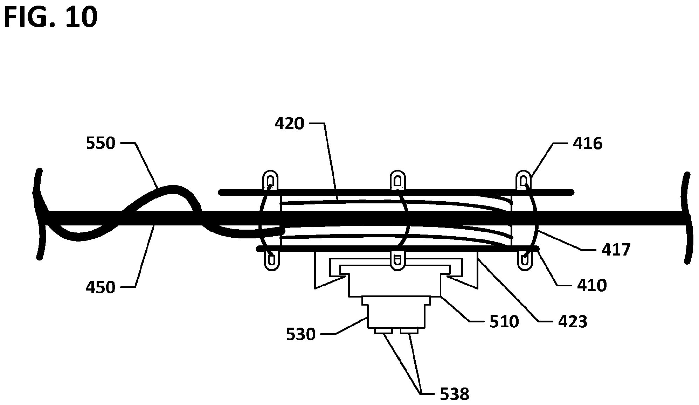

During payout, the distribution cable 150A also may be unwound from the slack storage spool 220 to the extent necessary as the mounting and payout arrangement 200 is routed to the first pole 108A. The payout spool 230 is removed when the distribution cable 150 has been unwound from the payout spool 230. At the mounting structure 108, the mounting bracket 210 is mounted to the first mounting structure 108A (FIG. 1). In some implementations, the mounting bracket 210 is mounted to the first pole 108A while the indexing terminal 110 is held by the mounting bracket 210. In other implementations, the indexing terminal 110 is secured to the mounting bracket 210 after the mounting bracket 210 is mounted to the first pole 108A. In certain implementations, the mounting bracket 210 is lashed to a strand between adjacent mounting structures 108 (e.g., see FIG. 10).

The connectorized end 156 of a second distribution cable 150B is plugged into the second port 114 of the indexing terminal 110. The second distribution cable 150B extends from an indexing terminal 110 mounted to a second mounting and payout arrangement 200. The distribution cable 150B is paid out from a payout spool 230 of the second mounting and payout arrangement 200 as the mounting and payout arrangement 200 is routed from the first pole 108A to the second pole 108B. The payout spool 230 is removed when the distribution cable 150 has been unwound from the payout spool 230. The second distribution cable 150B also is unwound from the slack storage spool 220 as necessary as the second mounting and payout arrangement 200 is routed to the second pole 108B. The mounting bracket 210 of the second mounting and payout arrangement 200 is mounted to the second pole 108B. Additional indexing terminals 110 are likewise mounted to additional poles (e.g., poles 108B-108H) in the same way.

When a subscriber 109 is to be added to the network 100, a multi-service terminal 130 may be mounted to the pole 108A-108H that is located closest to the subscriber 109 or otherwise corresponds to the subscriber 109. In certain implementations, the multi-service terminal 130 is mounted to the mounting bracket 210 (e.g., via fastening arrangement 214). Mounting both the indexing terminal 110 and the multi-service terminal 130 to the same bracket 210 may reduce the footprint taken up by the mounting and payout arrangement 200. Mounting both the indexing terminal 110 and the multi-service terminal 130 to the same bracket 210 also may reduce the cost of deploying the multi-service terminal (e.g., by facilitating installation at the pole 108). A connectorized end of a stub cable 135 of the multi-service terminal 130 is plugged into the first port 112 of the indexing terminal 110, thereby providing optical signals from the first port 112 to the distribution ports 138 of the multi-service terminal 130. A drop cable 160 may be routed between the subscriber 109 and one of the distribution ports 138.

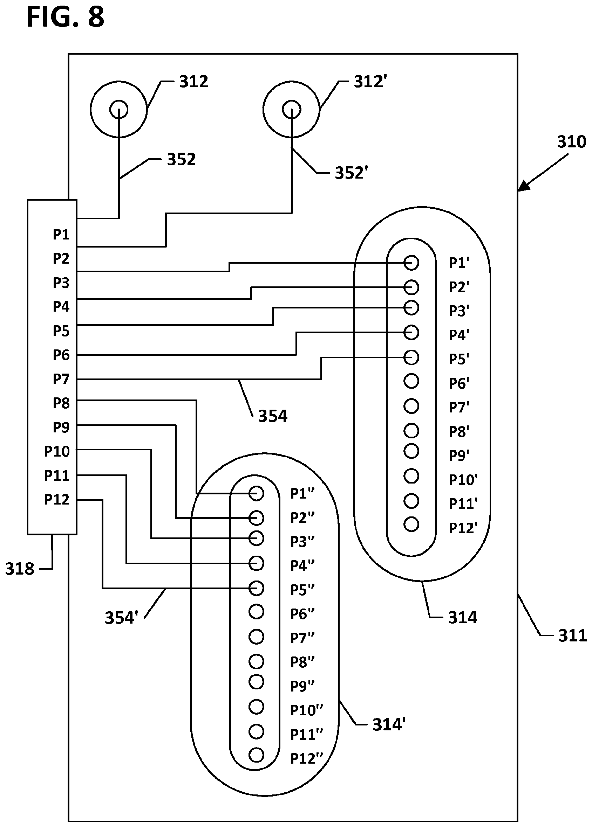

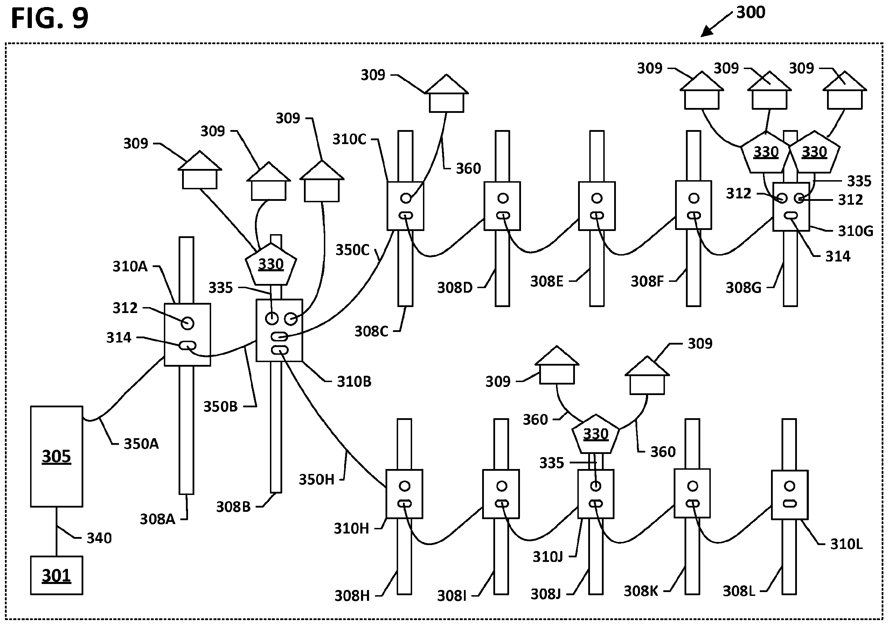

FIG. 8 illustrates another example indexing terminal 310 suitable for use in a distributed optical network 300 of FIG. 9. The indexing terminal 310 includes a housing 311 that defines at least a first single-fiber port 312 and at least a first multi-fiber port 314. In the example shown, the housing 311 defines a first single-fiber port 312, a second single-fiber port 312', a first multi-fiber port 314, and a second multi-fiber port 314'. In other implementations, however, the housing 311 may include a greater number of single-fiber ports and/or multi-fiber ports. In the example shown, the indexing terminal housing 311 also defines an input port 318 (e.g., ruggedized adapter, ruggedized connector, non-ruggedized optical adapter, non-ruggedized optical connector, etc.) configured to receive a multi-fiber distribution cable. In other implementations, however, a stub distribution cable may extend outwardly from the indexing terminal housing 311 as discussed above with respect to the indexing terminal 110 of FIG. 2.

The indexing terminal 310 includes internal cabling between the input port 318 and the other ports 312, 314. The input port 318 arranges optical fibers of the internal cabling into indexed positions. In the example shown, the input port 318 arranges twelve optical fibers into twelve indexed positions P1-P12. In general, each of the single-fiber ports 312 receives one of the optical fibers of the internal cabling for distribution to subscribers 109. In certain implementations, each of the single-fiber ports 312 receives the optical fiber from the next available indexed position of the input port 318. For example, a first optical fiber 352 of the internal cabling extends from the first indexed position P1 at the input port 318 to the first single-fiber port 312 and a second optical fiber 352' extends from the second indexed position P2 at the input port 318 to the second single-fiber port 312'.

The remaining optical fibers of the internal cabling are routed to one or more multi-fiber ports 314 for distribution to additional indexing terminals. In the example shown, the optical fibers 354 extending from the third through seventh indexed positions P3-P7 are routed to the first multi-fiber port 314 and the optical fibers 354' extending from the eight through the twelfth indexed positions P8-P12 are routed to the second multi-fiber port 314'. Each of the multi-fiber ports 314, 314' is configured to receive an optical connector having the same number of optical fibers as the input port 318 and, hence, the same number of indexed positions. In the example shown, the first multi-fiber port 314 has twelve indexed positions P1'-P12' and the second multi-fiber port 314' has twelve indexed positions P1"-P12". In other implementations, the multi-fiber ports 314, 314' and input port 318 may have a greater or lesser number of indexed positions. The optical fibers 354, 354' are indexed at the multi-fiber ports 314, 314' in sequence beginning with the first indexed position P1', P1", respectively. At least one of the indexed positions at each multi-fiber port 314, 314' does not receive an optical fiber 354, 354'. In the example shown, multiple indexed positions at each multi-fiber port 314, 314' do not receive optical fibers 354, 354'.

Such a cabling configuration enables the optical network to branch at one of the indexing terminals 310. For example, FIG. 9 illustrates another example optical network 300 that includes a central office 301, at least one fiber distribution hub 305, and a plurality of indexing terminals. Any of the indexing terminals described herein may be utilized in the optical network 300. For example, a first indexing terminal 310A mounted to a first mounting location 308A in FIG. 9 has the same structural configuration as described above with respect to the indexing terminal 110 of FIG. 2. The first indexing terminal 310A has one single-fiber port 312 and one multi-fiber port 314. A stub cable 350A optically couples the first indexing terminal 310A to the distribution hub 305.

A second indexing terminal 310B is mounted to a mounting structure 308B in FIG. 9. A second distribution cable 350B optically couples the second indexing terminal 310B to the first indexing terminal 310A. The second indexing terminal 310B has two single-fiber ports and two multi-fiber ports (e.g., see indexing terminal 310 of FIG. 8). As shown in FIG. 9, a third distribution cable 350C may optically couple a third indexing terminal 310C to the first multi-fiber port 314 and another distribution cable 350H may optically couple an eighth indexing terminal 310H to the second multi-fiber port 314 of the second indexing terminal 310B. Only the first five optical fibers of each distribution cable 350C, 350H carry optical signals. Accordingly, no more than four indexing terminals may be daisy-chained to each of the third and eight indexing terminals 310C, 310H. Such a branching of optical signals may be advantageous to enable routing of the optical network 300 down adjacent streets.

One or more multi-service terminals 330 may be optically coupled to the indexing terminals 310. For ease in viewing, only four multi-service terminals 330 are shown in FIG. 9. However, it will be understood that each indexing terminal 310 may be coupled to one or more multi-service terminals. In the example shown, one multi-service terminal 330 is shown optically coupled to the first single-fiber port 312 of the second indexing terminal 310B, two multi-service terminals 330 are shown optically coupled to the first and second single-fiber ports 312 of the seventh indexing terminal 310G, and one multi-service terminal 330 is shown optically coupled to the tenth indexing terminal 310J. In some implementations, one or more of the subscribers may be coupled directly to one of the single-fiber ports 312 of the indexing terminals 310 (e.g., see the second single-fiber port 312 of the second indexing terminal 310B).

FIG. 10 illustrates another example indexing terminal 510 mounted to another example mounting bracket 410. The mounting bracket 410 is coupled to a slack storage spool 420. In certain implementations, a removable payout spool may be coupled to the mounting bracket 410 and/or stack storage spool 420 prior to deployment. Hooks 416 are coupled to the mounting bracket 410 to facilitate lashing the mounting bracket 410 to a strand 450 extending between mounting structures (e.g., telephone poles). For example, straps, cable ties, or other fastening structures 417 may couple to the hooks 416 and extend around the strand 450. The distribution cable 550 also may be lashed to the strand 450 as the distribution cable 550 extends between the indexing terminal 510 and a previous indexing terminal or distribution hub. In other implementations, the mounting bracket may be secured to the mounting structure itself (e.g., as shown in FIG. 7).

FIG. 10 also illustrates another example multi-service terminal 530 that mounts to the indexing terminal 510. In certain implementations, the multi-service terminal 530 mounts to a housing of the indexing terminal 510 instead of directly to the bracket 410. For example, the multi-service terminal 530 may define a port interface (e.g., a male connector or a female adapter) configured to mate with the port interface (e.g., a corresponding male connector or a corresponding female adapter) of one or more single-fiber ports of the indexing terminal 510. In certain implementations, the port interfaces are ruggedized. In the example shown, the multi-service terminal 530 mounts (e.g., snaps fits, nests, etc.) to a front of the indexing terminal 510 so that the drop ports 538 of the multi-service terminal 530 are freely accessible.

## Claims

1. A distributed optical network (100, 300) comprising:
a plurality of distribution cables (150, 350) , each distribution cable including a number of optical fibers (152, 154, 352, 354, 354') extending between first ends and second ends, the first ends of the optical fibers being terminated at an optical connector (156, 318) that indexes the optical fibers;
a plurality of indexing terminals (110, 310, 510), each indexing terminal having at least a first output port (112, 312) and a second output port (114, 314, 314'), the first output port being optically coupled to the second end of a first (152, 352) of the optical fibers of a respective one of the distribution cables, the first end of the first optical fiber being indexed at a first fiber position (P1) at the respective optical connector, the second output port indexing the second ends of a plurality of the optical fibers (154, 354, 354') of the respective distribution cable, the second output port having a same number of fiber positions (Pn') as the optical connector, at least one of the fiber positions (P12') at the second output port not receiving the second end of one of the plurality of the optical fibers of the respective distribution cable and
at least one multi-service terminal (130, 330, 530) mounted external to the indexing terminals and at or near the indexing terminals, the at least one multi-service terminal having an input that is configured to mate with the first output port of any of the indexing terminals, the at least one multi-service terminal including an optical splitter that receives optical signals provided to the input of the at least one multi-service terminal, the at least one multi-service terminal also including a plurality of splitter pigtails routed from the optical splitter to ruggedized distribution ports (138, 538), the ruggedized ports being configured to receive drop cables (160) as needed to add subscribers (109) to the network.

2. The distributed optical network of claim 1, further comprising a plurality of mounting brackets (210, 410) securing the indexing terminals to mounting structures (108).

3. The distributed optical network of claim 2, further comprising a plurality of payout spools (230) removably coupled to the mounting brackets.

4. The distributed optical network of claim 2, further comprising a plurality of slack storage spools (220, 420) fixedly coupled to the mounting brackets.

5. The distributed optical network of claim 2, wherein the at least one multi-service terminal is mounted with one of the indexing terminals to one of the mounting brackets.

6. The distributed optical network of claim 1, wherein each of the distribution cables is a stub distribution cable that extends outwardly from an interior of one of the indexing terminals.

7. The distributed optical network of claim 1, further comprising a drop cable routed between a first of the distribution ports of the at least one multi-service terminal and a subscriber premises.

8. The distributed optical network of claim 1, wherein the at least one multi-service terminal includes a plurality of optical splitters.

9. The distributed optical network of claim 1, wherein a cable (135) optically couples a multi-service terminal selected from said at least one multi-service terminal to a first indexing terminal selected from said plurality of indexing terminals.

10. The distributed optical network of claim 9, wherein the cable is a stub cable that extends from the selected multi-service terminal.

11. The distributed optical network of claim 9, wherein the cable is connectorized at both ends.

12. The distributed optical network of claim 9, wherein the cable is a stub cable that extends from the first indexing terminal.

13. The distributed optical network of claim 1, wherein a second multi-service terminal (330) is mounted at or near a first of the indexing terminals, the second multi-service terminal having an input that is configured to mate with a third output port (312') of the first indexing terminal, the second multi-service terminal including an optical splitter that receives optical signals provided to the input of the second multi-service terminal, the second multi-service terminal also including a plurality of splitter pigtails routed from the optical splitter to distribution ports of the second multi-service terminal.

14. The distributed optical network of claim 1, wherein each indexing terminal includes a housing (111,311) defining an interior and an input port (158, 318), wherein the input port, the first output port, and the second output port are ruggedized.

## Patentansprüche

1. Verteiltes optisches Netz (100, 300), das Folgendes umfasst:
mehrere Verteilungskabel (150, 350), wobei jedes Verteilungskabel eine Anzahl an optischen Fasern (152, 154, 352, 354, 354') beinhaltet, die sich zwischen ersten Enden und zweiten Enden erstrecken, wobei die ersten Enden der optischen Fasern bei einem optischen Verbinder (156, 318) abgeschlossen sind, der die optischen Fasern indiziert;
mehrere Indizierungsanschlüsse (110, 310, 510), wobei jeder Indizierungsanschluss wenigstens einen ersten Ausgangsport (112, 312) und einen zweiten Ausgangsport (114, 314, 314') aufweist, wobei der erste Ausgangsport optisch mit dem zweiten Ende einer ersten (152, 352) der optischen Fasern eines jeweiligen der Verteilungskabel gekoppelt ist, wobei das erste Ende der ersten optischen Faser bei einer ersten Faserposition (P1) bei dem jeweiligen optischen Verbinder indiziert ist, wobei der zweite Ausgangsport die zweiten Enden mehrerer der optischen Fasern (154, 354, 354') des jeweiligen Verteilungskabels indiziert, wobei der zweite Ausgangsport eine gleiche Anzahl an Faserpositionen (Pn') wie der optische Verbinder aufweist, wobei wenigstens eine der Faserpositionen (P12') bei dem zweiten Ausgangsport das zweite Ende der mehreren optischen Fasern des jeweiligen Verteilungskabels nicht empfängt, und
wenigstens einen Mehrfachdienstanschluss (130, 330, 530), der außerhalb der Indizierungsanschlüsse und bei oder nahe den Indizierungsanschlüssen montiert ist, wobei der wenigstens eine Mehrfachdienstanschluss einen Eingang aufweist, der dazu konfiguriert ist, an den ersten Ausgangsport von einem beliebigen der Indizierungsanschlüsse anzukoppeln, wobei der wenigstens eine Mehrfachdienstanschluss einen optischen Teiler beinhaltet, der optische Signale empfängt, die an den Eingang des wenigstens einen Mehrfachdienstanschlusses geliefert werden, wobei der wenigstens eine Mehrfachdienstanschluss auch mehrere Teiler-Pigtails beinhaltet, die von dem optischen Teiler zu robusten Verteilungsports (138, 538) geführt sind, wobei die robusten Ports dazu konfiguriert sind, Drop-Kabel (160) nach Bedarf zum Hinzufügen von Teilnehmern (109) zu dem Netz zu empfangen.

2. Verteiltes optisches Netz nach Anspruch 1, das ferner mehrere Montagehalterungen (210, 410) umfasst, die die Indizierungsanschlüsse an den Montagestrukturen (108) befestigen.

3. Verteiltes optisches Netz nach Anspruch 2, das ferner mehrere Abgabespulen (230) umfasst, die entfernbar mit den Montagehalterungen gekoppelt sind.

4. Verteiltes optisches Netz nach Anspruch 2, das ferner mehrere Überlängenlagerungsspulen (220, 420) umfasst, die fest mit den Montagehalterungen gekoppelt sind.

5. Verteiltes optisches Netz nach Anspruch 2, wobei der wenigstens eine Mehrfachdienstanschluss mit einem der Indizierungsanschlüsse an einer der Montagehalterungen montiert ist.

6. Verteiltes optisches Netz nach Anspruch 1, wobei jedes der Verteilungskabel ein Stub-Verteilungskabel ist, das sich von einem Innenbereich von einem der Indizierungsanschlüsse auswärts erstreckt.

7. Verteiltes optisches Netz nach Anspruch 1, das ferner ein Drop-Kabel umfasst, das zwischen einem ersten der Verteilungsports des wenigstens einen Mehrfachdienstanschlusses und einem Teilnehmergebäude geführt ist.

8. Verteiltes optisches Netz nach Anspruch 1, wobei der wenigstens eine Mehrfachdienstanschluss mehrere optische Teiler beinhaltet.

9. Verteiltes optisches Netz nach Anspruch 1, wobei ein Kabel (135) einen Mehrfachdienstanschluss, der aus dem wenigstens einen Mehrfachdienstanschluss ausgewählt ist, optisch mit einem ersten Indizierungsanschluss, der aus den mehreren Indizierungsanschlüssen ausgewählt ist, koppelt.

10. Verteiltes optisches Netz nach Anspruch 9, wobei das Kabel ein Stub-Kabel ist, das sich von dem ausgewählten Mehrfachdienstanschluss erstreckt.

11. Verteiltes optisches Netz nach Anspruch 9, wobei das Kabel an beiden Enden mit Verbindern versehen ist.

12. Verteiltes optisches Netz nach Anspruch 9, wobei das Kabel ein Stub-Kabel ist, das sich von dem ersten Indizierungsanschluss erstreckt.

13. Verteiltes optisches Netz nach Anspruch 1, wobei ein zweiter Mehrfachdienstanschluss (330) bei oder nahe einem ersten der Indizierungsanschlüsse montiert ist, wobei der zweite Mehrfachdienstanschluss einen Eingang aufweist, der dazu konfiguriert ist, an einen dritten Ausgangsport (312') des ersten Indizierungsanschlusses anzukoppeln, wobei der zweite Mehrfachdienstanschluss einen optischen Teiler beinhaltet, der optische Signale empfängt, die an den Eingang des zweiten Mehrfachdienstanschlusses geliefert werden, wobei der zweite Mehrfachdienstanschluss auch mehrere Teiler-Pigtails beinhaltet, die von dem optischen Teiler zu den Verteilungsports des zweiten Mehrfachdienstanschlusses geführt sind.

14. Verteiltes optisches Netz nach Anspruch 1, wobei jeder Indizierungsanschluss ein Gehäuse (111, 311) beinhaltet, das einen Innenbereich und einen Eingangsport (158, 318) definiert, wobei der Eingangsport, der erste Ausgangsport und der zweite Ausgangsport robust sind.

## Revendications

1. Réseau optique distribué (100, 300), comprenant :
la pluralité de câbles de distribution (150, 350), chaque câble de distribution incluant un nombre de fibres optiques (152, 154, 352, 354, 354') s'étendant entre des premières extrémités et des secondes extrémités, les premières extrémités des fibres optiques étant terminées à un connecteur optique (156, 318) qui indexe les fibres optiques ;
une pluralité de bornes d'indexage (110, 310, 510), chaque borne d'indexage possédant au moins un premier port de sortie (112, 312) et un deuxième port de sortie (114, 314, 314'), le premier port de sortie étant optiquement couplé à la seconde extrémité d'une première (152, 352) des fibres optiques d'un respectif des câbles de distribution, la première extrémité de la première fibre optique étant indexée à une première position de fibre (P1) au connecteur optique respectif, le deuxième port de sortie indexant les secondes extrémités d'une pluralité des fibres optiques (154, 354, 354') du câble de distribution respectif, le deuxième port de sortie possédant un même nombre de positions de fibre (Pn') que le connecteur optique, au moins une des positions de fibre (P12') au deuxième port de sortie ne recevant pas la seconde extrémité d'une de la pluralité des fibres optiques du câble de distribution respectif et au moins une borne multi-service (130, 330, 530) montée de façon externe aux bornes d'indexage et au niveau ou près des bornes d'indexage, l'au moins une borne multi-service possédant une entrée qui est configurée pour s'accoupler au premier port de sortie de l'une quelconque des bornes d'indexage, l'au moins une borne multi-service incluant un diviseur optique qui reçoit des signaux optiques fournis à l'entrée de l'au moins une borne multi-service, l'au moins une borne multi-service incluant également une pluralité de queues de cochon de diviseur routées du diviseur optique à des ports de distribution renforcés (138, 538), les ports renforcés étant configurés pour recevoir des câbles de branchement (160) selon les besoins pour ajouter des abonnés (109) au réseau.

2. Réseau optique distribué selon la revendication 1, comprenant en outre une pluralité de supports de montage (210, 410) fixant les bornes d'indexage à des structures de montage (108).

3. Réseau optique distribué selon la revendication 2, comprenant en outre une pluralité de bobines débitrices (230) couplées de façon amovible aux supports de montage.

4. Réseau optique distribué selon la revendication 2, comprenant en outre une pluralité de bobines de stockage lâche (220, 420) couplées de façon fixe aux supports de montage.

5. Réseau optique distribué selon la revendication 2, dans lequel l'au moins une borne multi-service est montée avec une des bornes d'indexage sur un des supports de montage.

6. Réseau optique distribué selon la revendication 1, dans lequel chacun des câbles de distribution est un câble de distribution de tronçon qui s'étend vers l'extérieur à partir d'un intérieur d'une des bornes d'indexage.

7. Réseau optique distribué selon la revendication 1, comprenant en outre un câble de branchement routé entre un premier des ports de distribution de l'au moins une borne multi-service et les locaux d'un abonné.

8. Réseau optique distribué selon la revendication 1, dans lequel l'au moins une borne multi-service inclut une pluralité de diviseurs optiques.

9. Réseau optique distribué selon la revendication 1, dans lequel un câble (135) couple optiquement une borne multi-service sélectionnée à partir de ladite au moins une borne multi-service à une première borne d'indexage sélectionnée à partir de ladite pluralité de bornes d'indexage.

10. Réseau optique distribué selon la revendication 9, dans lequel le câble est un câble de tronçon qui s'étend à partir de la borne multi-service sélectionnée.

11. Réseau optique distribué selon la revendication 9, dans lequel le câble est connectorisé aux deux extrémités.

12. Réseau optique distribué selon la revendication 9, dans lequel le câble est un câble de tronçon qui s'étend à partir de la première borne d'indexage.

13. Réseau optique distribué selon la revendication 1, dans lequel une seconde borne multi-service (330) est montée au niveau ou près d'une première des bornes d'indexage, la seconde borne multi-service possédant une entrée qui est configurée pour s'accoupler avec un troisième port de sortie (312') de la première borne d'indexage, la seconde borne multi-service incluant un diviseur optique qui reçoit des signaux optiques fournis à l'entrée de la seconde borne multi-service, la seconde borne multi-service incluant également une pluralité de queues de cochon de diviseur routées du diviseur optique à des ports de distribution de la seconde borne multi-service.

14. Réseau optique distribué selon la revendication 1, dans lequel chaque borne d'indexage inclut un logement (111, 311) définissant un intérieur et un port d'entrée (158, 318), dans lequel le port d'entrée, le premier port de sortie, et le deuxième port de sortie sont renforcés.
